(19) Europäisches Patentamt
European Patent Office
Office européen des brevets

(11) **EP 4 286 455 A1**

(12) **EUROPÄISCHE PATENTANMELDUNG**

(43) Veröffentlichungstag:
**06.12.2023  Patentblatt 2023/49**

(21) Anmeldenummer: **22177206.4**

(22) Anmeldetag: **03.06.2022**

(51) Internationale Patentklassifikation (IPC):
**C08J 5/04** *(2006.01)*    **B29C 64/10** *(2017.01)*
**B29C 70/08** *(2006.01)*   **B32B 5/06** *(2006.01)*
**B32B 17/04** *(2006.01)*

(52) Gemeinsame Patentklassifikation (CPC):
**C08J 5/042; B29C 70/083; B29C 70/38;
B33Y 70/10; C08J 5/043; D01D 5/00; D01D 5/42;
D01F 1/10;** B29C 64/118; B33Y 10/00;
C08J 2365/00; C08J 2371/00; C08J 2377/06

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Evonik Operations GmbH
45128 Essen (DE)**

(72) Erfinder: **Die Erfindernennung liegt noch nicht vor**

(74) Vertreter: **Evonik Patent Association
c/o Evonik Industries AG
IP Management
Bau 1042A/PB 15
Paul-Baumann-Straße 1
45772 Marl (DE)**

(54) **ENDLOSFASERVERSTÄRKTES FILAMENT AUS THERMOPLASTISCHEM KUNSTSTOFF ZUM EINSATZ IN ADDITIVEN FERTIGUNGSPROZESSEN UND VERFAHREN DAZU**

(57)    Die Erfindung betrifft ein endlosfaserverstärktes Filament aus thermoplastischem Kunststoff zum Einsatz in additiven Fertigungsprozessen und Verfahren dazu.

Abbildung 1

**Beschreibung**

Die vorliegende Erfindung betrifft die Umarbeitung von UD-Tapes zu kleinen endlosfaserverstärkten (Polymer-)Filamenten (0,5 - 2 mm Kantenlänge bei rechteckigem Querschnitt) für 3D-Druck-Anwendungen. Durch die dadurch möglichen Skalierungs-möglichkeiten können solche Filamente kosteneffizienter und mit besseren Produkteigenschaften gegenüber dem Stand der Technik produziert werden.

Die Herstellung von Bauteilen aus Kunststoffen mittels additiven Fertigungsverfahren (auch als 3D-Druck bezeichnet) hat in den letzten Jahren ein enormes Wachstum erfahren. Es sind zahlreiche Verfahren mit unterschiedlichen Eigenschaften und Grundprinzipien entwickelt worden. Extrusionsbasierte Verfahren wie das sogenannte Fused Deposition Modeling (FDM) sind dabei am weitesten verbreitet (siehe Kabir, S. M. F., Mathur, K. u. Seyam, A.-F. M.: A critical review on 3D printed continuous fiber-reinforced composites: History, mechanism, materials and properties. Composite Structures 232 (2020), S. 111476). Dabei werden runde Polymerfilamente mit Durchmessern von typischerweise 1,75 - 3 mm durch eine Extrusionsdüse geführt, aufgeschmolzen und strangförmig zur finalen Bauteilgeometrie abgelegt.

Um die mechanischen Eigenschaften 3D-gedruckter Bauteile zu erhöhen, sind faserverstärkte Kunststoffe im Allgemeinem von großem Interesse für die additive Fertigung. Durch die Verwendung von thermoplastischen Endlosfilamenten im FDM-Verfahren eignet sich dieses Verfahren in der Theorie auch besonders gut, faserverstärkte, insbesondere endlosfaserverstärkte Halbzeuge zu verarbeiten.

Bei der Verarbeitung von endlosfaserverstärkten Halbzeugen in 3D-Druck-Prozessen werden nach dem aktuellen Stand der Technik meist vorimprägnierte endlosfaserverstärkte Filamente aus thermoplastischen Polymeren genutzt, die in der Regel in pultrusionsähnlichen Prozessen unter Verwendung verschiedener Imprägniermethoden hergestellt werden (siehe Cogswell, F. N.: Thermoplastic aromatic polymer composites. A study of the structure, processing and properties of carbon fibre reinforced polyetheretherketone and related materials. Oxford: Butterworth-Heinemann 1992, S. 51 ff.). Alternative Verfahren verwenden Standardfilamente und führen die Verstärkungsfaser erst in der Extrusionsdüse zu (siehe Adumitroaie, A., Antonov, F., Khaziev, A., Azarov, A., Golubev, M. u. Vasiliev, V. V.: Novel Continuous Fiber Bi-Matrix Composite 3-D Printing Technology. Materials (Basel, Switzerland) 12 (2019) 18). Vorteilhaft ist hier die Flexibilität, alle verfügbaren Standard-3D-Druck-Filamente zu verwenden. Nachteilig ist die deutlich komplexere Anlagentechnik und der hohe Preis von Faserhalbzeugen in diesen Dimensionen (siehe Kabir, S. M. F., Mathur, K. u. Seyam, A.-F. M.: A critical review on 3D printed continuous fiber-reinforced composites: History, mechanism, materials and properties. Composite Structures 232 (2020), S. 111476). Weitere Prozesse, wie z.B. der sog. Direct Energy Deposition (DED) Prozess der Fa. Arevo heizen ein vorimprägniertes Filament während des Ableqeprozesses berührungslos mit einer externen Wärmequelle auf (siehe Zhang, D., Rudolph, N. u. Woytowitz, P.: Reliable Optimized Structures with High Performance Continuous Fiber Thermoplastic Composites from Additive Manufacturing (AM). AMPE Conference Proceedings. Charlotte, NC, May 20-23, 2019. Society for the Advancement of Material and Process (2019)), ähnlich zum laserunterstützten Tapelegeverfahren (siehe Steyer, M.: Laserunterstütztes Tapelegeverfahren zur Fertigung endlosfaserverstärkter Thermoplastlaminate). Die hierfür verwendeten Filamente benötigen nicht zwingend einen runden Querschnitt wie beim klassischen FDM-Verfahren, auch rechteckige Querschnitte sind verarbeitbar.

Verfahren, die vorimprägnierte Halbzeuge verwenden, sind auf die Verfügbarkeit solcher Filamente angewiesen. Endlosfaserverstärkte Filamente sind nach dem derzeitigen Stand der Technik nicht in größerer Menge frei kommerziell erhältlich. In der Regel sind diese nur direkt bei den Herstellern von 3D-Druckern zu erwerben und kosten den Endanwender teilweise bis zu 2000 €/kg (siehe Markforged: Carbon Fiber Filament. Our stiffest, strongest fiber with the highest strength-to-weight ratio., 2020. https://markforged.com/materials/carbon-fiber/, abgerufen am: 31.01.2020). Anforderungen an diese Halbzeuge sind vor allem ein definierter Faservolumengehalt, eine möglichst genaue Geometrie und ein möglichst geringer Porengehalt (siehe Zhang, D., Rudolph, N. u. Woytowitz, P.: Reliable Optimized Structures with High Performance Continuous Fiber Thermoplastic Composites from Additive Manufacturing (AM). AMPE Conference Proceedings. Charlotte, NC, May 20-23, 2019. Society for the Advancement of Material and Process (2019)). Während eine Vielzahl von Prozessen zur Herstellung von endlosfaserverstärkten Bauteilen im 3D-Druck dokumentiert und patentiert ist (siehe Hu, C., Sun, Z., Xiao, Y. u. Qin, Q.: Recent Patents in Additive Manufacturing of Continuous Fiber Reinforced Composites. Recent Patents on Mechanical Engineering 12 (2019) 1, S. 25-36), ist auch die Herstellung der Filamente selbst durch einige Veröffentlichung beschrieben, siehe Tabelle 1. Die Methoden in diesen Veröffentlichung beziehen sich allesamt auf spezielle Imprägnierverfahren wie die Verwendung von Polymerfasern, Lösungsmittelimprägnierung oder dergleichen (siehe vor allem die Veröffentlichung WO 2019/093277 der Fa. Toray). Die Umarbeitung bereits aus thermoplastischer Matrix und Endlosfasern bestehender Halbzeuge wird in keiner Veröffentlichung abgedeckt. Nicht in der u.g. Tabelle enthalten sind Veröffentlichungen, die den FDM-Prozess mit separater Zuführung von Fasern und Polymerfilament beschreiben (diese sind jedoch zahlreich vorhanden, z.B. Anisoprint: WO 2017/188861, Northrop Grumman Systems Corp.: US 2017/157851 oder The Boeing Company: US 2016/0082641).

*Tabelle 1: Offenbarungen endlosfaserverstärkter Filamente für 3D-Druck-Anwendungen bezogen auf thermoplastische vorimprägnierte Halbzeuge*

| Anmeldenummer | Titel | Anmelder |
|---|---|---|
| KR 2019062911 WO 2019/107991 | Fiber reinforced thermoplastic resin composite material | Lotte Chemical Corp., S. Korea |
| US 2018/0250850 US 2016/0361834 US 2018/0066441 | Composite material for 3D printing produced by pultrusion method | Apis Cor Engineering, LLC, USA |
| CN 108102120 | Preparation method of continuous carbon fiber reinforced thermoplastic plastic filament for fused deposition modeling (FDM) 3D printing | Zhejiang University of Technology, Peop. Rep. China |
| CN 108407300 | Method for preparing continuous fiber reinforced resin-based composite three dimensional printing wire material, involves taking thermoplastic resin or mixed resin system as raw material and preparing fiber bundle by passing multiple yarn | Xi'an Jiaotong University, Peop. Rep. China |
| CN 110271113 | Method and device for preparing consumable material of continuous fiber bundles | Shenzhen Qianhai Sciencecore 3D Tech Co. LTD, Peop. Rep. China |
| WO 2019/093277 | Fiber-reinforced thermoplastic resin filament and molded article of same | Toray Industries, Inc., Japan |

Betrachtet man nun die Herstellung solcher Filamente genauer, ist neben technischen Herausforderungen vor allem die Wirtschaftlichkeit allein durch die Größe des Filaments ein limitierender Faktor. Gegenüber Standard-Filamenten sind die Dimensionen endlosfaserverstärkter Filamente durch die hohe Biegesteifigkeit zumeist noch geringer.

Die aus dem Stand der Technik bekannten Herstellungsverfahren von Filamenten und die Filamente selbst sind also nicht in jeder Hinsicht zufriedenstellend. Daher ist eine Aufgabe der Erfindung die Bereitstellung verbesserter Herstellungsverfahren von Filamenten und von Filamenten selbst. Diese Aufgabe wird durch das beanspruchte Verfahren und die beanspruchten Filamente gelöst.

Es wurde überraschend gefunden, dass basierend auf einer skalierbaren Produktion eine signifikante Produktivitätssteigerung bei Herstellungsverfahren von Filamenten und eine Verbesserung mechanischer Eigenschaften von Filamenten selbst erzielt werden.

Das erfindungsgemäße Vorgehen birgt zahlreiche Vorteile gegenüber dem Stand der Technik, bei dem eine Einzelimprägnierung der Rovings zugrunde gelegt wird.

Vorteile gegenüber dem Stand der Technik sind u.a. folgende:

- Skalierungsmöglichkeit der Produktion: Alle Skaleneffekte auf wirtschaftlicher Seite (begrenzte Geschwindigkeit der Imprägnierung vs. volumenmäßiger Austrag) können voll genutzt werden. Die zusätzlichen Kosten der Konsolidierung bzw. des Slittings sind dahingehend untergeordnet. Schätzt man die Geschwindigkeit der UD-Tapeherstellung sowie der Filamentherstellung zunächst als gleich schnell ab, ergibt sich eine Steigerung der Produktionsgeschwindigkeit um dem Faktor 20 gegenüber der Einzelfilament-herstellung (bei Verwendung von 150 mm breitem UD-Tape).
- Verbesserte Imprägnierung und Reduzierung der Porosität: Es können alle verfügbaren Technologien eingesetzt werden, um die Imprägnierung zu verbessern, ohne Beschränkung durch die Größe des Filaments zu erfahren. Beispielsweise kann ein hoher Imprägnierdruck angelegt werden oder eine lange Imprägnierstrecke verwendet werden, ohne die Prozessstabilität zu gefährden.
- Die Flexibilität gegenüber der Herstellung der Profile in einem Schritt hinsichtlich der möglichen Materialkombinationen ist durch Trennung der Prozessschritte höher. Es können alle kommerziell verfügbaren Tapematerialien zur Herstellung von Filamenten verwendet werden.

Abbildung 1 zeigt Schliffbilder des einzelnen Tapes (oben), des konsolidierten Materials aus drei Tapes (Mitte) und des herausgeschnittenen Filaments (unten rechts).

Abbildung 2 zeigt die Ergebnisse der PA12/CF-Versuchsreihe 2.

Abbildung 3 zeigt die Ergebnisse der PEEK/CF-Versuchsreihe 2.

Abbildung 4 zeigt die Ergebnisse von Dichtemessungen bei Original-Tapes und laminierten Tapes.

Abbildungen 5, 6 und 7 zeigen die Ergebnisse von Biegeprüfungen an Einzelfilamenten.

Abbildung 8 zeigt die Verringerung der Porosität am Beispiel von PA12/CF-Filamenten.

Die Erfindung betrifft in einem ersten Aspekt ein Verfahren zur Herstellung mindestens eines Filaments, welches folgende Schritte umfasst:

(i) Bereitstellung mindestens zweier Bänder, welche alle unidirektional endlosfaserverstärkt sind und jeweils mindestens eine thermoplastische Matrix enthalten;

(ii) Konsolidierung der mindestens zwei Bänder, welche alle unidirektional endlosfaserverstärkt sind und jeweils mindestens eine thermoplastische Matrix enthalten, unter Zufuhr von Wärme und Druck zur Herstellung eines zwei- oder mehrschichtigen unidirektional faserverstärkten Bands; und

(iii) Zuschneiden des zwei- oder mehrschichtigen unidirektional faserverstärkten Bands zur Herstellung des mindestens einen Filaments.

Sofern die Bänder UD-Tapes sind, kann das beanspruchte Verfahren zur Herstellung von Filamenten bevorzugt wie folgt zusammengefasst werden:

1. Kontinuierliche Konsolidierung von mehreren UD-Tapes übereinander zur Herstellung von mehrschichtigen UD-Tapes mit einer Dicke von bis zu 1 mm;

2. Längsschneiden (auch "Slitting" genannt) der mehrschichtigen Tapes zu rechteckigen Filamenten mit einer Breite von minimal 1 mm und Aufspulen.

In Schritt 1 werden mindestens zwei UD-Tapes übereinander in eine kontinuierliche Heißpressanlage eingeführt. Hierzu können handelsübliche Doppelbandpressen zum Einsatz kommen, die Geschwindigkeiten von bis zu 15 m/min abhängig vom Material ermöglichen (siehe Modulare Doppelbandpresse, Berndorf Band Group, 2018). Unter Zufuhr von Wärme und Druck werden die UD-Tapes dann zu einem unidirektionalen Verbundmaterial konsolidiert. Auf einer Spule aufgewickelt kann dieses Zwischenprodukt dann zur Weiterverarbeitung transportiert werden. In Schritt 2 erfolgt der Schneidprozess zu Einzelfilamenten, der wiederum auf herkömmlichen Schneidanlagen zur Konfektionierung von bandförmigen Produkten erfolgen kann.

Das beanspruchte Verfahren zur Herstellung der Filamente basiert also auf der Verfügbarkeit von sogenannten UD-Tapes. Als UD-Tapes werden hier endlosfaserverstärkte thermoplastische Halbzeuge mit bandförmiger Geometrie bezeichnet. Nach dem aktuellen Stand der Technik sind solche Halbzeuge aus einer Vielzahl von thermoplastischen Polymeren (von PP, PA6 und PA12 bis PEEK), verstärkt mit Kohlenstoff- oder Glasfasern auf dem Markt verfügbar. Die Breite dieser Halbzeuge beträgt in der Regel ca. 6 - 600 mm, die Dicke 0,15 - 0,25 mm und der Faseranteil bewegt sich meist zwischen 40 und 60 vol.-%. Im Portfolio von Evonik finden sich Tapes aus kohlenstoff-faserverstärktem PA12 sowie kohlenstofffaserverstärktem PEEK mit einer Breite von 150 mm, einer Dicke von 0,25 mm und einem Faseranteil von 45 vol.-% (siehe Lightweight and Strong. VESTAPE® uni-directional tapes for lightweight structural design, Evonik Resource Efficiency GmbH, 2019).

UD-Tapes sind aus dem Stand der Technik bekannt. Erfindungsgemäß einsetzbare UD-Tapes werden z.B. im Europäischen Patent Nr. 2 951 259 B1 und in der Europäischen Patentanmeldung Nr. 2 759 580 A1 offenbart. Weitere erfindungsgemäß einsetzbare UD-Tapes werden im US-Patent Nr. 6,919,118 B2 und in der US-Patentanmeldung mit der Veröffentlichungsnummer 2014/0147620 offenbart.

Ein erfindungsgemäß einsetzbares UD-Tape kann jede geeignete Länge und jede geeignete Breite haben. Zum Beispiel kann das UD-Tape länger oder kürzer sein als 1, 2, 3, 4, 5, 6, 7, 8, 9, 10, 12, 14, 16, 18, 20, 25, 30, 35, 40, 45, 50, 55, 60, 70, 80, 90 oder 100 Meter (m), oder zwischen diesen Werten liegen. Das UD-Tape kann breiter oder weniger breit sein als 1, 2, 3, 4, 5, 6, 7, 8, 9, 10, 12, 14, 16, 18, 20, 25, 30, 35, 40, 45, 50, 55, 60, 70, 80, 90 oder 100 Zentimeter (cm), oder zwischen diesen Werten liegen. Die Dicke des UD-Tapes, wie z.B. die durchschnittliche oder mittlere Dicke des UD-Tapes, kann geringer oder höher sein als 0,07, 0,08, 0,09, 0,10, 0,11, 0,12, 0,13, 0,14, 0,15, 0,16, 0,17, 0,18, 0,19, 0,20, 0,21, 0,22, 0,23, 0,24, 0,25, 0,26, 0,27, 0,28, 0,29 oder 0,30 mm, oder zwischen diesen Werten liegen.

Ein erfindungsgemäß einsetzbares UD-Tape kann Kohlenstofffasern, Glasfasern, Aramidfasern, Basaltfasern oder eine Kombination davon (z.B. Kohlenstofffasern und Glasfasern) enthalten. Ein Matrixmaterial des UD-Tapes kann ein thermoplastisches Material, einschließlich Polyethylenterephthalat (PET), ein Polycarbonat (PC), Polybutylenterephthalat (PBT), Poly(phenylenoxid) (PPO), Polypropylen (PP), Polyethylen (PE), Polyvinylchlorid (PVC), Polystyrol (PS), Polymethylmethacrylat (PMMA), Polyethylenimin oder Polyetherimid (PEI) oder ein Derivat davon umfassen, oder ein thermoplastisches Elastomer (TPE), ein Terephthalsäure-Elastomer (TPA), Poly(cyclohexandimethylenterephthalat) (PCT), ein Polyamid (PA), Polysulfonat (PSS), Polyaryletherketon (PAEK), Acrylnitril-Butyldien-Styrol (ABS), Polyphenylensulfid (PPS), Polyethersulfon (PES), ein Copolymer davon oder eine Mischung davon (z.B. Polycarbonat, ein Polyamid wie z.B. Polyamid 6, Polyamid 66 und/oder dergleichen), ein Copolymer davon oder eine Mischung davon umfassen.

Das Matrixmaterial eines erfindungsgemäß einsetzbaren UD-Tapes kann ein Flammschutz-mittel enthalten, wie z.B. eine Phosphatverbindung (z.B. Resorcinbis(diphenylphosphat)), ein sulfoniertes Salz, Halogen, Phosphor, Talk, Siliziumdioxid, ein hydratisiertes Oxid, ein bromiertes Polymer, ein chloriertes Polymer, ein phosphoriertes Polymer, ein Nanoton, ein Organoton, ein Polyphosphonat, ein Poly[phosphonat-co-carbonat], ein Polytetrafluorethylen- und Styrol-Acrylnitril-Copolymer, ein Polytetrafluorethylen- und Methylmethacrylat-Copolymer, ein Polysilixan-Copolymer, und/oder dergleichen.

Das Matrixmaterial eines erfindungsgemäß einsetzbaren UD-Tapes kann einen Haftvermittler zur Förderung der Haftung zwischen dem Matrixmaterial und den Fasern des UD-Tapes, ein Antioxidationsmittel, einen Hitzestabilisator, einen Fließmodifikator, einen Stabilisator, einen UV-Stabilisator, einen UV-Absorber, einen Schlagzähigkeitsmodifikator, ein Vernetzungs-mittel, einen Farbstoff oder eine Kombination davon enthalten.

Nicht einschränkende Beispiele für einen Haftvermittler sind das mit Maleinsäureanhydrid gepfropfte Polypropylen POLYBOND 3150, das im Handel von DUPONT erhältlich ist, das mit Maleinsäureanhydrid gepfropfte Polypropylen FUSABOND P613, das im Handel von DUPONT erhältlich ist, Maleinsäureanhydrid-Ethylen oder eine Kombination davon.

Ein nicht einschränkendes Beispiel für ein Fließhilfsmittel ist CR20P Peroxid-Masterbatch, das im Handel von POLYVEL INC. erhältlich ist.

Ein nicht einschränkendes Beispiel für einen Hitzestabilisator ist IRGANOX B 225, im Handel erhältlich von BASF.

Nicht einschränkende Beispiele für UV-Stabilisatoren sind sterisch gehinderte Amin-Lichtstabilisatoren, Hydroxybenzophenone, Hydroxyphenylbenzotriazole, Cyanoacrylate, Oxanilide, Hydroxyphenyltriazine und Kombinationen davon.

Nicht einschränkende Beispiele für UV-Absorber sind 4-substituierte 2-Hydroxybenzophenone und ihre Derivate, Arylsalicylate, Monoester von Diphenolen, wie Resorcinmonobenzoat, 2-(2-Hydroxyaryl)-benzotriazole und ihre Derivate, 2-(2-Hydroxyaryl)-1,3,5-Triazine und ihre Derivate oder Kombinationen davon.

Zu den nicht einschränkenden Beispielen für Schlagzähigkeitsmodifikatoren gehören Elastomere/Weichblöcke, die in einem oder mehreren matrixbildenden Monomeren gelöst sind (z.B. HIPS in loser Schüttung, ABS in loser Schüttung, reaktormodifiziertes PP, LOMOD, LEXAN EXL und/oder dergleichen), thermoplastische Elastomere, die durch Compoundierung in einem Matrixmaterial dispergiert sind (z.B. Di-, Tri- und Multiblock-Copolymere, (funktionalisierte) Olefin-(Co-)Polymere und/oder ähnliche), vordefinierte Kern-Schale-(Substrat-Pfropf-)Teilchen, die durch Compoundierung in einem Matrixmaterial verteilt sind (z.B. MBS, ABS-HRG, AA, ASA-XTW, SWIM und/oder ähnliche), oder Kombinationen davon.

Nicht einschränkende Beispiele für Vernetzungsmittel sind Divinylbenzol, Benzoylperoxid, Alkylendioldi(meth)acrylate (z.B. Glykolbisacrylat und/oder dergleichen), Alkylentrioltri(meth)acrylate, Polyesterdi(meth)acrylate, Bisacrylamide, Triallylcyanurat, Triallylisocyanurat, Allyl(meth)acrylat, Diallylmaleat, Diallylfumarat, Diallyladipat, Triallylester der Citronensäure, Triallylester der Phosphorsäure oder Kombinationen davon. Ein solcher Zusatzstoff kann reines Polypropylen enthalten.

Ein erfindungsgemäß einsetzbares UD-Tape kann weitere Matrices und/oder Additive enthalten.

Ein erfindungsgemäß einsetzbares UD-Tape kann einen Faservolumenanteil von weniger als 50 % aufweisen. Bevorzugt weist ein erfindungsgemäß einsetzbares UD-Tape einen Faservolumenanteil von 40 % bis 50 %, besonders bevorzugt von 43 % bis 47 %, insbesondere von etwa 45 %, auf.

Der Faservolumenanteil wird bevorzugt mittels Glührückstand, chemischer Extraktion und/oder Auszählen bestimmt. Das UD-Tape kann eine relativ hohe laterale Faserkohäsion aufweisen.

Verfahren zur Konsolidierung von mehreren UD-Tapes zur Herstellung mehrschichtiger Laminate sind dem Fachmann bekannt. Es kann diesbezüglich z.B. auf die Deutsche Patentanmeldung Nr. 102015217404 A1 und die Europäische Patentanmeldung Nr. 3 268 216 A1 verwiesen werden.

Verfahren zum Zuschneiden von Filamenten sind dem Fachmann ebenfalls bekannt. Es kann diesbezüglich z.B. auf die Europäische Patentanmeldung Nr. 3 851 565 A1 verwiesen werden.

In einer bevorzugten Ausführungsform umfasst das Verfahren zusätzlich folgende Schritte:

(ii*) Aufwickeln des zwei- oder mehrschichtigen unidirektional faserverstärkten Bands auf eine Spule;

(ii**) Transport und/oder Lagerung des aufgewickelten zwei- oder mehrschichtigen unidirektional faserverstärkten Bands; und

(ii***) Abwickeln des zwei- oder mehrschichtigen unidirektional faserverstärkten Bands von der Spule.

In einer weiteren bevorzugten Ausführungsform umfasst das Verfahren zusätzlich folgenden Schritt:
(iii*) Aufwickeln des mindestens einen Filaments auf eine Spule.

In einer weiteren bevorzugten Ausführungsform erfolgt Schritt (i) unter Bereitstellung von

- zwei Bändern, welche beide unidirektional endlosfaserverstärkt sind und jeweils mindestens eine thermoplastische Matrix enthalten; oder

- drei Bändern, welche alle unidirektional endlosfaserverstärkt sind und jeweils mindestens eine thermoplastische Matrix enthalten; oder

- mindestens zwei und höchstens 50 Bändern, welche alle unidirektional endlosfaserverstärkt sind und jeweils mindestens eine thermoplastische Matrix enthalten; oder

- mindestens drei und höchstens 25 Bändern, welche alle unidirektional endlosfaserverstärkt sind und jeweils mindestens eine thermoplastische Matrix enthalten.

In einer weiteren bevorzugten Ausführungsform erfolgt Schritt (ii) unter Konsolidierung der mindestens zwei Bänder, welche alle endlosfaserverstärkt sind und jeweils mindestens eine thermoplastische Matrix enthalten, in einer Doppelbandpresse, bevorzugt in einer kontinuierlichen Heißpressanlage; und/oder kontinuierlich.

In einer weiteren bevorzugten Ausführungsform erfolgt Schritt (ii) bei

- einer (durchschnittlichen) Produktionsgeschwindigkeit ($v_k$) von mindestens 0,25 m/min, bevorzugt mindestens 0,75 m/min und besonders bevorzugt etwa 1 m/min; und/oder

- einem (durchschnittlichen) Druck von mindestens 2 bar, bevorzugt mindestens 3 bar und besonders bevorzugt etwa 4 bar; und/oder

- einer (durchschnittlichen) Verarbeitungstemperatur von mindestens 140 °C, bevorzugt mindestens 200 °C und besonders bevorzugt etwa 260 °C.

In einer weiteren bevorzugten Ausführungsform erfolgt das Verfahren unter Herstellung von mindestens einem (Einzel-)Filament und höchstens 200 (Einzel-)Filamenten, bevorzugt höchstens 150 (Einzel-)Filamenten, in Schritt (iii).

In einer weiteren bevorzugten Ausführungsform

- ist/sind mindestens ein in Schritt (iii) hergestelltes Filament, vorzugsweise alle in Schritt (iii) hergestellten Filamente, konfektioniert

    - zur Extrusion durch eine Düse bei einem additiven Fertigungsverfahren, vorzugsweise einem 3D-Druck-Verfahren, und/oder

    - zur Durchführung weiterer geeigneter Ablegeverfahren zum schichtweisen Aufbau von Bauteilen; und/oder

- ist der Querschnitt mindestens eines in Schritt (iii) hergestellten Filaments, vorzugsweise aller in Schritt (iii) hergestellten Filamente, im Wesentlichen rechteckig; und/oder

- beträgt die Dicke ($h_{Fil}$) oder die durchschnittliche Dicke ($h_{Fil, durch.}$) mindestens eines in Schritt (iii) hergestellten Filaments, vorzugsweise aller in Schritt (iii) hergestellten Filamente, 0,5 mm bis 2,5 mm und/oder die Breite ($b_{Fil}$) mindestens eines in Schritt (iii) hergestellten Filaments, vorzugsweise aller in Schritt (iii) hergestellten Filamente, 0,5 mm bis 2,5 mm.

In einer weiteren bevorzugten Ausführungsform erfolgt das Verfahren unter Längsschneiden des zwei- oder mehrschichtigen unidirektionalen konsolidierten Bands zur Herstellung des mindestens einen Filaments mittels Rollscherschnitt in Schritt (iii).

In einer weiteren bevorzugten Ausführungsform von Schritt (iii)

- beträgt die Produktionsgeschwindigkeit ($v_s$) mindestens 1 m/min, bevorzugt mindestens 2 m/min und besonders bevorzugt etwa 3 m/min, und/oder

- beträgt die Abzugskraft mindestens 5 N, bevorzugt mindestens 10 N und besonders bevorzugt etwa 15 N.

In einer weiteren bevorzugten Ausführungsform

(a) ist/sind in Schritt (i) von den mindestens zwei Bändern, welche alle unidirektional endlosfaserverstärkt sind und jeweils mindestens eine thermoplastische Matrix enthalten,

- mindestens ein Band, vorzugsweise exakt ein Band, ein UD-Tape, besonders bevorzugt ein mit Kohlenstoff- und/oder Glasfasern verstärktes UD-Tape und ganz besonders bevorzugt ein PA12/CF-Tape oder ein PEEK/CF-Tape; oder

- mindestens zwei Bänder, vorzugsweise exakt zwei Bänder, UD-Tapes, besonders bevorzugt mit Kohlenstoff- und/oder Glasfasern verstärkte UD-Tapes und ganz besonders bevorzugt PA12/CF-Tapes und/oder PEEK/CF-Tapes; oder

- mindestens drei Bänder, vorzugsweise exakt drei Bänder, UD-Tapes, besonders bevorzugt mit Kohlenstoff- und/oder Glasfasern verstärkte UD-Tapes und ganz besonders bevorzugt PA12/CF-Tapes und/oder PEEK/CF-Tapes; oder

- höchstens 50, vorzugsweise höchstens 25, UD-Tapes, besonders bevorzugt mit Kohlenstoff- und/oder Glasfasern verstärkte UD-Tapes und ganz besonders bevorzugt PA12/CF-Tapes und/oder PEEK/CF-Tapes;

oder

(b) sind in Schritt (i) alle der Bänder, welche endlosfaserverstärkt sind und jeweils mindestens eine thermoplastische Matrix enthalten, UD-Tapes, bevorzugt mit Kohlenstoff- und/oder Glasfasern verstärkte UD-Tapes und ganz besonders bevorzugt PA12/CF-Tapes und/oder PEEK/CF-Tapes.

In einer weiteren bevorzugten Ausführungsform umfasst das Verfahren folgenden Schritt entweder zusätzlich oder umfasst den Schritt nicht:

- Schmelzimprägnieren des mindestens einen UD-Tapes oder der mindestens zwei oder drei UD-Tapes, oder der höchstens 50 UD-Tapes.

Die Imprägnierung bezieht sich auf die Herstellung der Tapes, die durch diese Erfindung nicht schon bei der Herstellung an die Anforderungen bei Verwendung im 3D-Druck angepasst werden muss. Stattdessen können einfacher herstellbare Tapes durch Verpressen übereinander nachträglich in eine andere Geometrie gebracht werden.

Die Erfindung betrifft in einem zweiten Aspekt ein Filament erhältlich nach dem erfindungsgemäßen Verfahren.

Die Erfindung betrifft in einem dritten Aspekt eine Spule umfassend mindestens ein Filament erhältlich nach dem erfindungsgemäßen Verfahren.

Die Erfindung betrifft in einem vierten Aspekt ein additives Fertigungsverfahren, vorzugsweise ein 3D-Druck-Verfahren, welches folgende Schritte umfasst:

- Bereitstellung des Filaments erhältlich nach dem erfindungsgemäßen Verfahren und ggfs. weiterer Filamente,

- Extrusion des Filaments erhältlich nach dem erfindungsgemäßen Verfahren und ggfs. der weiteren Filamente ggfs. durch mindestens eine Düse, und

- Fertigung eines Modells, bevorzugt eines 3D-Modells, durch das Filament erhältlich nach dem erfindungsgemäßen Verfahren und ggfs. durch die weiteren Filamente.

Die Erfindung betrifft in einem fünften Aspekt ein Modell, bevorzugt ein 3D-Modell, erhältlich nach dem Fertigungsverfahren gemäß dem vierten Aspekt der Erfindung.

Die nachfolgenden Beispiele dienen der Erläuterung der Erfindung, sind jedoch nicht einschränkend auszulegen.

Beispiele

Beispiel 1:

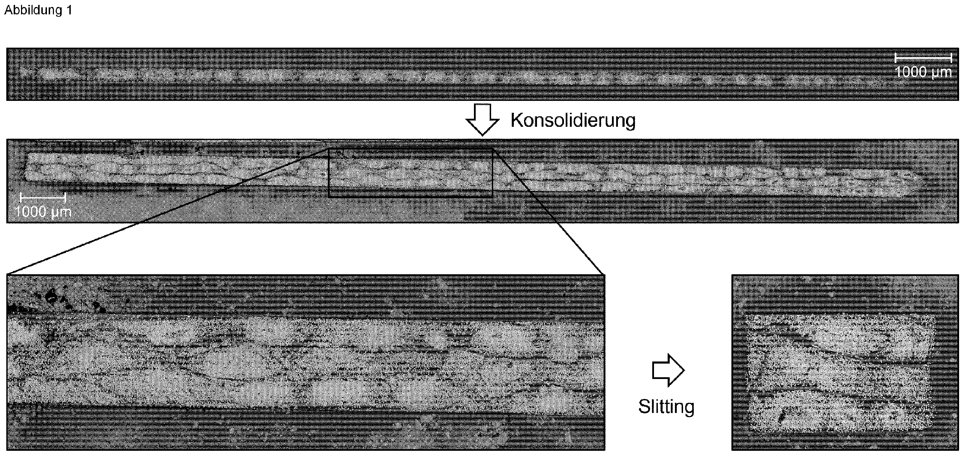

In Vorversuchen wurden drei PA12/CF-Tapes übereinander in einer Doppelbandpresse konsolidiert. Analysen von Schliffbildern und der Zugfestigkeit zeigen, dass ein vollkonsolidierter Verbund hergestellt werden konnte (siehe Abbildung 1).

Es konnte jedoch aus anlagentechnischen Gründen keine vollkontinuierliche Herstellung nachgewiesen werden, sondern eine bestimmte Maximallänge bei einer Geschwindigkeit von 1 m/min. Diese Tapes wurden zu 1 mm bzw. 2 mm breiten Streifen geschnitten. Mit Auswahl der richtigen Schneidtechnologie ist dies mit speziell ausgerüsteten Maschinen, die als solche jedoch Stand der Technik sind, auch in einem kontinuierlichen Prozess möglich. Die Aufwicklung und das Prozessverhalten bei vollkontinuierlichem Betrieb konnte durch die verfügbaren Halbzeuge hierbei nicht untersucht werden. Es konnten jedoch Filamente mit einer Dicke von 0,7 mm und einer Breite von 1 mm erfolgreich hergestellt werden, die sich insbesondere für 3D-Druck-Verfahren eignen, die eine gewisse Flexibilität in der Querschnittsgeometrie der Filamente erlauben.

Beispiel 2:

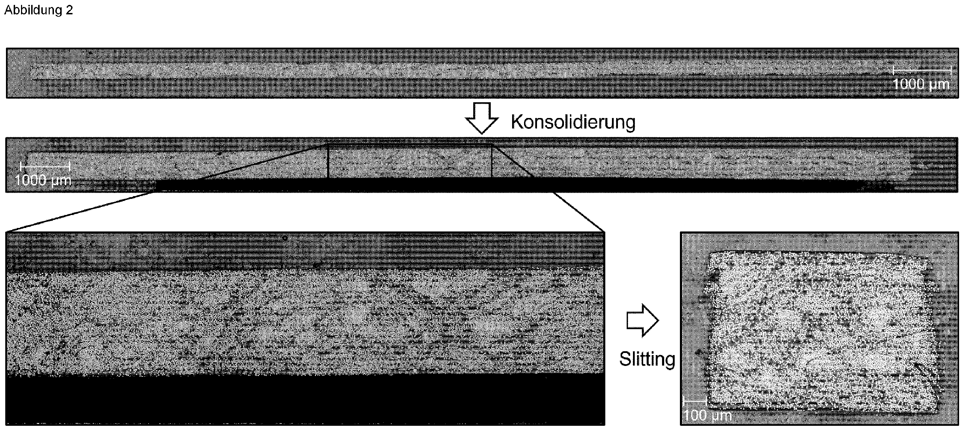

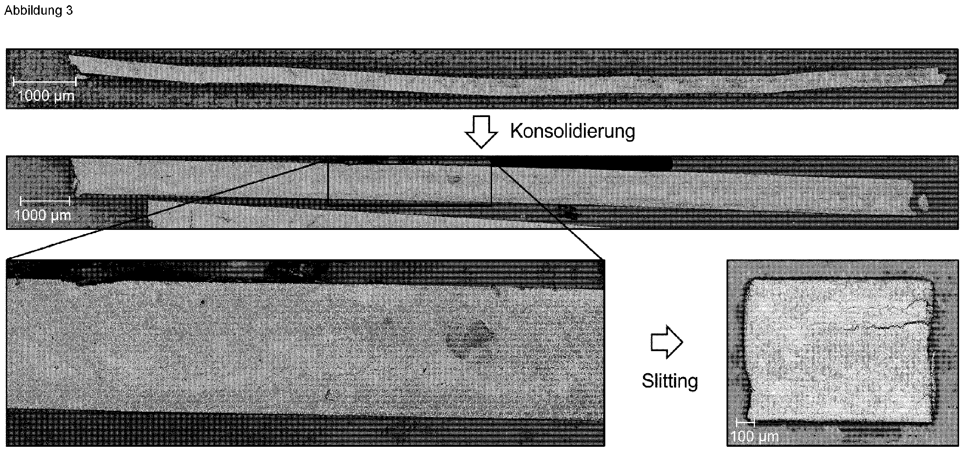

In einer zweiten Versuchsreihe konnten noch einmal deutlich verbesserte Ergebnisse mit PA12/CF-Tapes erzielt werden, zudem konnte auch die Machbarkeit des Verfahrens mit PEEK/CF-Tape nachgewiesen werden (siehe Abbildungen 2 und 3).

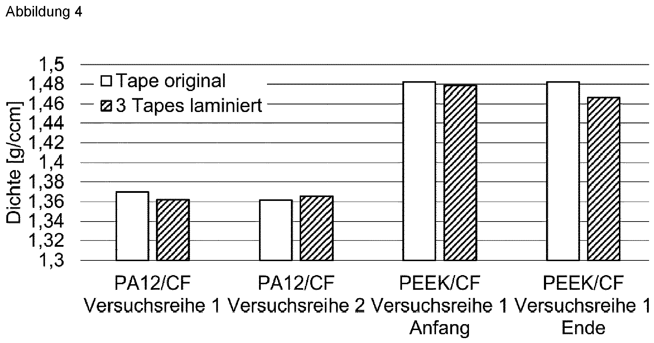

Erweiterte Untersuchung der Eigenschaften der konsolidierten Tapes:
Ein Vergleich der Dichte der Original-UD-Tapes mit den konsolidierten UD-Tapes zeigen bei optimaler Prozessführung eine Dichteerhöhung (Versuchsreihe 2, grau ist Tape original, schwarz sind die drei konsolidierten UD-Tapes), bei noch nicht optimalem Prozess eine Verringerung der Dichte (Versuchsreihe 1 sowie PEEK-Versuche). Es kann somit der Nachweis erbracht werden, dass eine Verringerung der Porosität erzielt werden kann (siehe Abbildung 4).

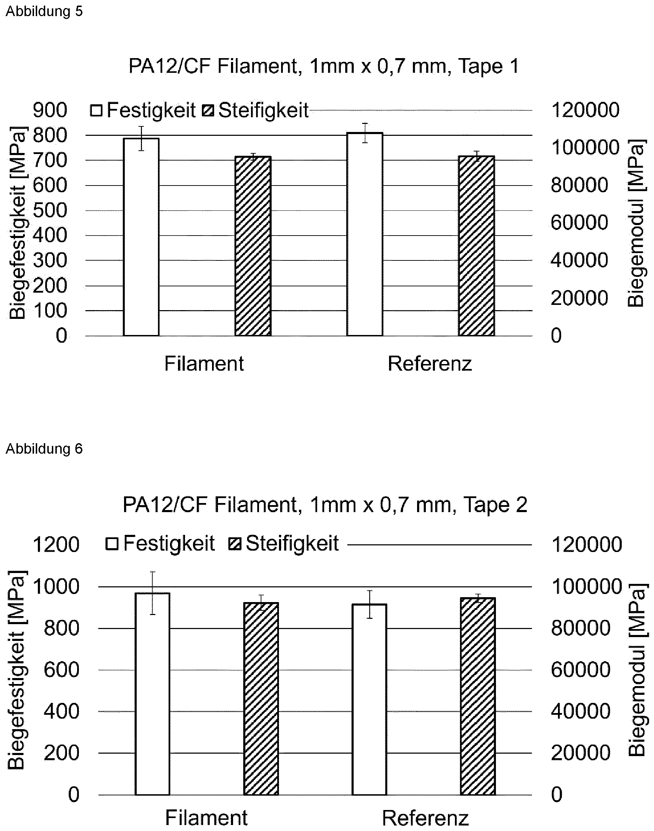

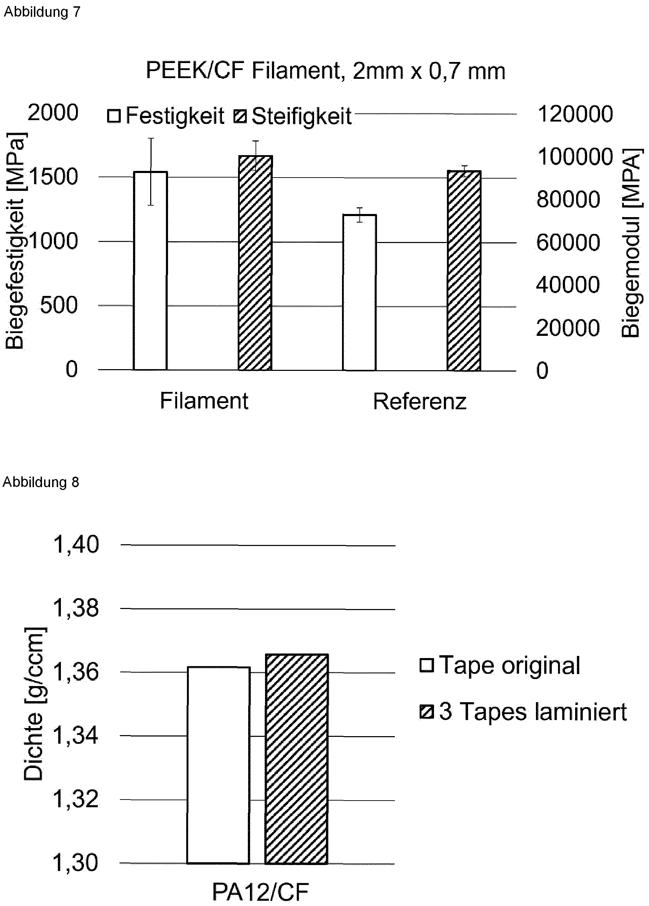

Biegeprüfung der Einzelfilamente:
Dreipunktbiegeprüfungen an den Einzelfilamenten zeigen Biegeeigenschaften, die vergleichbar mit den Referenzwerten aus gepressten Laminaten sind. Die Eigenschaften von PEEK/CF-Filamenten sind aufgrund des noch nicht optimierten Prozesses noch verringert (siehe Abbildungen 5, 6 und 7).

Beispiel 3:

Die Bestimmung der Porosität erfolgt üblicherweise über die Berechnung der Differenz von 100 % und der Summe aus gemessenem Faservolumengehalt und Matrixvolumengehalt, standardisiert in ISO 14127:2008. Dazu wird die Bestimmung der Dichte des Prüfkörpers sowie die Bestimmung des Fasermassengehaltes durch Pyrolyse oder Auflösen in Säuren benötigt. Der Fasermassengehalt bei PA12 basierten Tapes wird mittels Pyrolyse, bei PEEK durch Solvolyse, jeweils nach internem Standard.

Möglich ist auch die Präparation von mikroskopischen Schliffbildern quer zur Faserrichtung und die Bestimmung der Porosität mittels Auszählung der im Schliffbild sichtbaren Poren (nicht normgerecht).

Beispiel 4:

Materialien:
Das Produkt VESTAPE® PA12-CF45 10641 wurde eingesetzt.

Prozessparameter Heißpressen:

Die Versuche zum Heißpressen von drei PA12/CF-UD-Tapes erfolgte in einer Doppelbandpresse mit folgenden Parametern:

- Produktionsgeschwindigkeit $v_k$ = 1 m/min
- Druck: 4 bar
- Verarbeitungstemperatur: 260 °C

Prozessparameter Slitting:
Die Versuche zum Längsschneiden der o.g. mehrschichtigen UD-Tapes erfolgte mittels Rollscherschnitt mit folgenden Parametern

- Produktionsgeschwindigkeit $v_s$ = 3 m/min
- Abzugskraft: 15 N

Das Material wurde anschließend manuell entnommen.

Steigerung der Produktivität:

Die Abschätzung einer Produktivitätssteigerung der Filamentherstellung aus Tapes gegenüber der Einzelfilamentherstellung erfolgt mit folgenden Parametern:

Abmaße des Filamentes:

- Dicke: $h_{Fil}$ = 0,75 mm
- Breite: $b_{Fil}$ = 1 mm

Einzelfilamentherstellung:

- Produktionsgeschwindigkeit: $v_{Filament}$ = 2,5 m/min

Multifilamentherstellung:

- Produktionsgeschwindigkeit Tapeherstellung: $v_p$ = 2,5 m/min
- Dicke Tape: $h_{Tape}$ = 0,25 mm $\rightarrow$ 3 Tapes für Filamentdicke $h_{Fil}$ = 0,75 mm benötigt
- Breite: $b_{Tape}$ = 150 mm $\rightarrow$ Anzahl Filamente n = 150
- Geschwindigkeit Konsolidierung: $v_k$ = 1 m/min (s.o.)
- Geschwindigkeit Slitting: $v_s$ = 3 m/min (s.o.)
- Verschnitt: $\phi$ = 0,2

$$v_{Tape} = \frac{n - \varphi \times n}{\frac{h_{Fil}}{h_{Tape}} \times \frac{1}{v_p} + \frac{1}{v_k} + \frac{1}{v_s}} = 47 \frac{m}{min}$$

$\rightarrow$ resultierende Herstellgeschwindigkeit:

Daraus ergibt sich eine durch Versuche nachgewiesene Produktivitätssteigerung um den Faktor 19 unter der Annahme, dass alle 150 Filamente auf einmal aus dem Tape herausgeschnitten werden können. $(= \frac{v_{Tape}}{v_{Filament}})$ . Nimmt man an, dass nur 24 Aufspulstellen an der Schneidemaschine vorhanden sind, also nur 24 Filamente pro Tape in einem Durchgang herausgeschnitten werden können, ist dieser Prozess immer noch um den Faktor 12 schneller.

**Patentansprüche**

1. Ein Verfahren zur Herstellung mindestens eines Filaments, welches folgende Schritte umfasst:

   (i) Bereitstellung mindestens zweier Bänder, welche alle unidirektional endlosfaserverstärkt sind und jeweils mindestens eine thermoplastische Matrix enthalten;
   (ii) Kontinuierliche Konsolidierung der mindestens zwei Bänder, welche alle unidirektional endlosfaserverstärkt sind und jeweils mindestens eine thermoplastische Matrix enthalten, unter Zufuhr von Wärme und Druck zur Herstellung eines zwei- oder mehrschichtigen unidirektional faserverstärkten Bands; und
   (iii) Zuschneiden des zwei- oder mehrschichtigen unidirektional faserverstärkten Bands zur Herstellung des mindestens einen Filaments.

2. Das Verfahren nach Anspruch 1, welches zusätzlich folgende Schritte umfasst:

   (ii*) Aufwickeln des zwei- oder mehrschichtigen unidirektional faserverstärkten Bands auf eine Spule;
   (ii**) Transport und/oder Lagerung des aufgewickelten zwei- oder mehrschichtigen unidirektional faserverstärkten Bands; und
   (ii***) Abwickeln des zwei- oder mehrschichtigen unidirektional faserverstärkten Bands von der Spule.

3. Das Verfahren nach Anspruch 1 oder 2, welches zusätzlich folgenden Schritt umfasst:

(iii*) Aufwickeln des mindestens einen Filaments auf eine Spule.

4.  Das Verfahren nach einem oder mehreren der Ansprüche 1 bis 3 unter Bereitstellung in Schritt (i) von

    - zwei Bändern, welche beide unidirektional endlosfaserverstärkt sind und jeweils mindestens eine thermoplastische Matrix enthalten; oder
    - drei Bändern, welche alle unidirektional endlosfaserverstärkt sind und jeweils mindestens eine thermoplastische Matrix enthalten; oder
    - mindestens zwei und höchstens 50 Bändern, welche alle unidirektional endlosfaserverstärkt sind und jeweils mindestens eine thermoplastische Matrix enthalten; oder
    - mindestens drei und höchstens 25 Bändern, welche alle unidirektional endlosfaserverstärkt sind und jeweils mindestens eine thermoplastische Matrix enthalten.

5.  Das Verfahren nach einem oder mehreren der Ansprüche 1 bis 4

    - unter Konsolidierung der mindestens zwei Bänder, welche alle unidirektional endlosfaserverstärkt sind und jeweils mindestens eine thermoplastische Matrix enthalten, in einer Doppelbandpresse, bevorzugt in einer kontinuierlichen Heißpressanlage, in Schritt (ii); und/oder
    - wobei die Konsolidierung in Schritt (ii) eine kontinuierliche Konsolidierung ist, welche in einem kontinuierlichen Prozess betrieben wird.

6.  Das Verfahren nach Anspruch 5 bei

    - einer Produktionsgeschwindigkeit ($v_k$) von mindestens 0,25 m/min, bevorzugt mindestens 0,75 m/min und besonders bevorzugt etwa 1 m/min; und/oder
    - einem Druck von mindestens 2 bar, bevorzugt mindestens 3 bar und besonders bevorzugt etwa 4 bar; und/oder
    - einer Verarbeitungstemperatur von mindestens 140 °C, bevorzugt mindestens 200 °C und besonders bevorzugt etwa 260 °C.

7.  Das Verfahren nach einem oder mehreren der Ansprüche 1 bis 6 unter Herstellung von mindestens einem Filament, bevorzugt einem Einzelfilament, und höchstens 200 Filamenten, bevorzugt höchstens 200 Einzelfilamenten, und besonders bevorzugt höchstens 150 Filamenten, in Schritt (iii).

8.  Das Verfahren nach einem oder mehreren der Ansprüche 1 bis 7, wobei

    - mindestens ein in Schritt (iii) hergestelltes Filament, vorzugsweise alle in Schritt (iii) hergestellten Filamente, konfektioniert ist/sind

        - zur Extrusion durch eine Düse bei einem additiven Fertigungsverfahren, vorzugsweise einem 3D-Druck-Verfahren, und/oder
        - zur Durchführung weiterer geeigneter Ablegeverfahren zum schichtweisen Aufbau von Bauteilen; und/oder

    - der Querschnitt mindestens eines in Schritt (iii) hergestellten Filaments, vorzugsweise aller in Schritt (iii) hergestellten Filamente, im Wesentlichen rechteckig ist; und/oder
    - die Dicke ($h_{Fil}$) mindestens eines in Schritt (iii) hergestellten Filaments, vorzugsweise aller in Schritt (iii) hergestellten Filamente, 0,5 mm bis 2,5 mm und/oder die Breite ($b_{Fil}$) mindestens eines in Schritt (iii) hergestellten Filaments, vorzugsweise aller in Schritt (iii) hergestellten Filamente, 0,5 mm bis 2,5 mm beträgt.

9.  Das Verfahren nach einem oder mehreren der Ansprüche 1 bis 8 unter Längsschneiden des zwei- oder mehrschichtigen unidirektionalen konsolidierten Bands zur Herstellung des mindestens einen Filaments mittels Rollscherschnitt in Schritt (iii).

10. Das Verfahren nach Anspruch 9, wobei

    - die Produktionsgeschwindigkeit ($v_s$) mindestens 1 m/min, bevorzugt mindestens 2 m/min und besonders bevorzugt etwa 3 m/min beträgt, und/oder
    - die Abzugskraft mindestens 5 N, bevorzugt mindestens 10 N und besonders bevorzugt etwa 15 N beträgt.

**11.** Verfahren nach einem oder mehreren der Ansprüche 1 bis 10,

(a) wobei in Schritt (i) von den mindestens zwei Bändern, welche alle unidirektional endlosfaserverstärkt sind und jeweils mindestens eine thermoplastische Matrix enthalten,

- mindestens ein Band, vorzugsweise exakt ein Band, ein UD-Tape ist, besonders bevorzugt ein mit Kohlenstoff- und/oder Glasfasern verstärktes UD-Tape und ganz besonders bevorzugt ein PA12/CF-Tape oder ein PEEK/CF-Tape; oder
- mindestens zwei Bänder, vorzugsweise exakt zwei Bänder, UD-Tapes sind, besonders bevorzugt mit Kohlenstoff- und/oder Glasfasern verstärkte UD-Tapes und ganz besonders bevorzugt PA12/CF-Tapes und/oder PEEK/CF-Tapes; oder
- mindestens drei Bänder, vorzugsweise exakt drei Bänder, UD-Tapes sind, besonders bevorzugt mit Kohlenstoff- und/oder Glasfasern verstärkte UD-Tapes und ganz besonders bevorzugt PA12/CF-Tapes und/oder PEEK/CF-Tapes; oder
- höchstens 50, vorzugsweise höchstens 25, UD-Tapes sind, besonders bevorzugt mit Kohlenstoff- und/oder Glasfasern verstärkte UD-Tapes und ganz besonders bevorzugt PA12/CF-Tapes und/oder PEEK/CF-Tapes;

oder

(b) wobei in Schritt (i) alle der Bänder, welche endlosfaserverstärkt sind und jeweils mindestens eine thermoplastische Matrix enthalten, UD-Tapes sind, bevorzugt mit Kohlenstoff- und/oder Glasfasern verstärkte UD-Tapes und ganz besonders bevorzugt PA12/CF-Tapes und/oder PEEK/CF-Tapes.

**12.** Das Verfahren nach Anspruch 11, welches folgenden Schritt entweder zusätzlich umfasst oder nicht umfasst:

- Schmelzimprägnieren des mindestens einen UD-Tapes oder der mindestens zwei oder drei UD-Tapes, oder der höchstens 50 UD-Tapes.

**13.** Ein Filament erhältlich nach einem Verfahren gemäß einem oder mehreren der Ansprüche 1 bis 12.

**14.** Ein Roving und/oder eine Spule umfassend mindestens ein Filament nach Anspruch 13.

**15.** Ein additives Fertigungsverfahren, vorzugsweise ein 3D-Druck-Verfahren, welches folgende Schritte umfasst:

- Bereitstellung des Filaments nach Anspruch 13 und ggfs. weiterer Filamente,
- Extrusion des Filaments nach Anspruch 13 und ggfs. der weiteren Filamente ggfs. durch mindestens eine Düse, und
- Fertigung eines Modells, bevorzugt eines 3D-Modells, durch das Filament nach Anspruch 13 und ggfs. durch die weiteren Filamente;

und ggfs. ein Modell, bevorzugt ein 3D-Modell, erhältlich nach dem Fertigungsverfahren.

Abbildung 1

Konsolidierung

Slitting

1000 µm

Abbildung 2

Abbildung 3

Konsolidierung

Slitting

1000 µm

1000 µm

100 µm

Abbildung 4

Abbildung 5

### PA12/CF Filament, 1mm x 0,7 mm, Tape 1

Abbildung 6

### PA12/CF Filament, 1mm x 0,7 mm, Tape 2

Abbildung 7

## PEEK/CF Filament, 2mm x 0,7 mm

Abbildung 8

Europäisches
Patentamt

European
Patent Office

Office européen
des brevets

**EUROPÄISCHER RECHERCHENBERICHT**

Nummer der Anmeldung

EP 22 17 7206

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | WO 2016/099896 A1 (DU PONT [US])<br>23. Juni 2016 (2016-06-23)<br>* Zusammenfassung *<br>* Ansprüche 1-10 *<br>* Abbildungen 1, 2A, 2B *<br>* Seite 12, Absatz 3 *<br>* Seite 25, Absatz 2-3 *<br>* Seite 29, Absatz 2 – Seite 30 *<br>----- | 1,4-8,<br>10-13<br><br>2,3,9,<br>14,15 | INV.<br>C08J5/04<br>B29C64/10<br>B29C70/08<br>B32B5/06<br>B32B17/04 |
| X | Evonik: "VESTAPE Uni-directional tapes for structural lightweight design",<br>,<br>1. Januar 2017 (2017-01-01), Seiten 1-20,<br>XP055982641,<br>Gefunden im Internet:<br>URL:https://tp-composites.com/wp-content/uploads/sites/3/2017/04/VESTAPE-2-2017.pdf<br>[gefunden am 2022-11-17]<br>* das ganze Dokument *<br>----- | 1-15 | |
| X | Evonik: "VESTAKEEP i4 3DF – Das weltweit erste PEEK-Filament in Implantatqualität für den 3D-Druck – Evonik Industries",<br>,<br>28. Januar 2021 (2021-01-28), Seiten 1-5,<br>XP055982638,<br>Gefunden im Internet:<br>URL:https://web.archive.org/web/20210128055316/https://medical.evonik.com/en/peek-biomaterial-implants/vestakeep-filament-3d-printing<br>[gefunden am 2022-11-17]<br>* das ganze Dokument *<br>----- | 1-15 | RECHERCHIERTE SACHGEBIETE (IPC)<br><br>C08J<br>B32B<br>B29C |

Der vorliegende Recherchenbericht wurde für alle Patentansprüche erstellt

| Recherchenort | Abschlußdatum der Recherche | Prüfer |
|---|---|---|
| München | 17. November 2022 | Schlembach, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 17 7206

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2022

| Im Recherchenbericht angeführtes Patentdokument | Datum der Veröffentlichung | Mitglied(er) der Patentfamilie | Datum der Veröffentlichung |
|---|---|---|---|
| WO 2016099896 A1 | 23-06-2016 | EP 3233472 A1<br>US 2020139642 A1<br>WO 2016099896 A1 | 25-10-2017<br>07-05-2020<br>23-06-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019093277 A
- WO 2017188861 A
- US 2017157851 A
- US 20160082641 A
- KR 2019062911
- WO 2019107991 A
- US 20180250850 A
- US 20160361834 A
- US 20180066441 A
- CN 108102120

- CN 108407300
- CN 110271113
- EP 2951259 B1
- EP 2759580 A1
- US 6919118 B2
- US 20140147620 A
- DE 102015217404 A1
- EP 3268216 A1
- EP 3851565 A1


**In der Beschreibung aufgeführte Nicht-Patentliteratur**

- **KABIR, S. M. F. ; MATHUR, K. ; SEYAM, A.-F. M.** A critical review on 3D printed continuous fiber-reinforced composites: History, mechanism, materials and properties. *Composite Structures,* 2020, vol. 232, 111476
- **COGSWELL, F. N.** *Thermoplastic aromatic polymer composites. A study of the structure, processing and properties of carbon fibre reinforced polyetheretherketone and related materials,* 1992, 51
- **ADUMITROAIE, A. ; ANTONOV, F. ; KHAZIEV, A. ; AZAROV, A. ; GOLUBEV, M. ; VASILIEV, V. V.** Novel Continuous Fiber Bi-Matrix Composite 3-D Printing Technology. *Materials,* 2019, vol. 12, 18

- **ZHANG, D. ; RUDOLPH, N. ; WOYTOWITZ, P.** Reliable Optimized Structures with High Performance Continuous Fiber Thermoplastic Composites from Additive Manufacturing (AM). *AMPE Conference Proceedings,* 20190520
- **ZHANG, D. ; RUDOLPH, N. ; WOYTOWITZ, P.** Reliable Optimized Structures with High Performance Continuous Fiber Thermoplastic Composites from Additive Manufacturing (AM). *AMPE Conference Proceedings,* 20. Mai 2019
- **HU, C. ; SUN, Z. ; XIAO, Y. ; QIN, Q.** Recent Patents in Additive Manufacturing of Continuous Fiber Reinforced Composites. *Recent Patents on Mechanical Engineering,* 2019, vol. 12 (1), 25-36